# EUROPEAN PATENT SPECIFICATION

(11) **EP 4 423 824 B1**
(45) Date of publication and mention of the grant of the patent: **12.02.2025**
(21) Application number: 22813118.1
(22) Date of filing: 27.10.2022
(51) Int. Cl.: H01M 4/36, H01M 4/134, H01M 4/38, H01M 4/62, H01M 10/0525, H01M 4/02

(54) **A POWDER FOR USE IN THE NEGATIVE ELECTRODE OF A BATTERY, A METHOD FOR PREPARING SUCH A POWDER AND A BATTERY COMPRISING SUCH A POWDER**
PULVER ZUR VERWENDUNG IN DER NEGATIVELEKTRODE EINER BATTERIE, VERFAHREN ZUR HERSTELLUNG SOLCH EINES PULVERS UND BATTERIE MIT SOLCH EINEM PULVER
POUDRE DESTINÉE À ÊTRE UTILISÉE DANS L'ÉLECTRODE NÉGATIVE D'UNE BATTERIE, PROCÉDÉ DE PRÉPARATION D'UNE TELLE POUDRE ET BATTERIE COMPRENANT UNE TELLE POUDRE

(30) Priority: 29.10.2021 EP 21205537
(43) Date of publication of application: 04.09.2024
(73) Proprietor: Umicore, 1000 Brussels (BE)
(72) Inventor: MOEREMANS, Boaz, 2250 Olen (BE); BRIDEL, Jean-Sébastien, 2250 Olen (BE); MARX, Nicolas, 2250 Olen (BE)
(74) Representative: Umicore RDI Patent Department
(86) International application number: PCT/EP2022/080056
(87) International publication number: WO 2023/073089

(56) References cited:
- EP-A1- 3 836 261
- WO-A1-2020/129879
- US-B1- 10 964 940

## Description

### TECHNICAL FIELD AND BACKGROUND

The present invention relates to a powder for use in the negative electrode of a battery, to a method for preparing such a powder and to a battery comprising such a powder.

Lithium ion (Li-ion) batteries are currently the best performing batteries and already became the standard for portable electronic devices. In addition, these batteries already penetrated and rapidly gain ground in other industries such as automotive and electrical storage. Enabling advantages of such batteries are a high-energy density combined with a good power performance.

A Li-ion battery typically contains a number of so-called Li-ion cells, which in turn contain a positive electrode, also called cathode, a negative electrode, also called anode, and a separator which are immersed in an electrolyte. The most frequently used Li-ion cells for portable applications are developed using electrochemically active materials such as lithium cobalt oxide or lithium nickel manganese cobalt oxide for the cathode and a natural or artificial graphite for the anode.

It is known that one of the important limitative factors influencing a battery's performance and in particular a battery's energy density is the active material in the anode. Therefore, to improve the energy density, the use of electrochemically active materials comprising silicon, in the negative electrode, has been investigated over the past years.

In the art, the performance of a battery containing Si-based electrochemically active powders is generally quantified by a so-called cycle life of a full-cell, which is defined as the number of times or cycles that a cell comprising such material can be charged and discharged until it reaches 80% of its initial discharge capacity. Most works on silicon-based electrochemically active powders are therefore focused on improving said cycle life.

A drawback of using a silicon-based electrochemically active material in an anode is its large volume expansion during charging, which is as high as 300% when the lithium ions are fully incorporated, e.g. by alloying or insertion, in the anode's active material - a process often called lithiation. The large volume expansion of the silicon-based materials during lithium incorporation may induce stresses in the silicon-based particles, which in turn could lead to a mechanical degradation of the silicon material. Repeated periodically during charging and discharging of the Li-ion battery, the repetitive mechanical degradation of the silicon-based electrochemically active material may reduce the life of a battery to an unacceptable level.

Further, a negative effect associated with silicon is that a thick SEI, a Solid-Electrolyte Interface, may be formed on the anode. A SEI is a complex reaction product of the electrolyte and lithium, which leads to a loss of lithium availability for electrochemical reactions and therefore to a poor cycle performance, which is the capacity loss per charging-discharging cycle. A thick SEI may further increase the electrical resistance of a battery and thereby limit its ability to charge and discharge at high currents.

In principle, the SEI formation is a self-terminating process that stops as soon as a 'passivation layer' has formed on the surface of the silicon-based material.

However, because of the volume expansion of silicon-based particles, both silicon-based particles and the SEI may be damaged during discharging (lithiation) and recharging (de-lithiation), thereby freeing new silicon surface and leading to a new onset of SEI formation.

To solve the above-mentioned drawbacks, composite powders are usually used. In these composite powders, nano-sized silicon-based particles are mixed with at least one component suitable to protect the silicon-based particles from electrolyte decomposition and to accommodate volume changes. Such a component may be a carbon-based material, preferably forming a matrix.

Such composite powders are mentioned, for example, in US 10964940, wherein a particulate material consisting of composite particles, wherein the composite particles comprise a porous carbon framework and a plurality of nanoscale elemental silicon domains located within the pores of the porous carbon framework, is disclosed. In WO 2020/129879, a negative electrode mixture for an all-solid-state lithium ion battery, comprising a negative electrode material and a solid electrolyte, the negative electrode material including a composite (A) containing silicon-containing particles and a carbonaceous material, and one or more types of components (B) selected from a carbonaceous material and graphite, is disclosed.

Despite the use of such composite powders, there is still room for improvement of the performance of batteries containing Si-based electrochemically active powders. In particular, the existing composite powders do not allow achieving both a high capacity and a long cycle life, which is essential, in particular for the batteries of the electric vehicles.

It is an object of the present invention to provide a stable electrochemically active powder comprising (i) particles, the particles comprising a matrix material and silicon-based sub-particles embedded in the matrix material, and (ii) sulfur, powder which once used in the negative electrode in the Li-ion battery, is advantageous in that it allows achieving a high capacity combined to a long cycle life.

### SUMMARY OF THE INVENTION

This objective is achieved by providing a powder according to Embodiment 1, said powder, which once used in the anode of the Li-ion battery, allows achieving a higher initial coulombic efficiency (CE) and a higher average coulombic efficiency, as demonstrated in Examples 1 to 4 compared to Counterexamples 1 to 6.

The present invention concerns the following embodiments:

### Embodiment 1

In a first aspect, the invention concerns a powder, the powder comprising particles, wherein the particles comprise a matrix material and silicon-based sub-particles embedded in the matrix material, wherein the matrix material comprises a carbonaceous material, the powder further comprising sulfur, the sulfur content by weight in said powder being at least 0.1% of the content of carbonaceous material by weight and at most 1% of the content of carbonaceous material by weight.

Preferably, the sulfur content by weight in the powder is at most 0.8% of the content of carbonaceous material by weight and more preferably at most 0.6% of the content of carbonaceous material by weight.

Preferably at least 50% by weight of the matrix material is carbonaceous material, more preferably at least 70% by weight of the matrix material is carbonaceous material and most preferably at least 90 wt% by weight of the matrix material is carbonaceous material.

Preferably the silicon-based sub-particles are embedded in the carbonaceous material.

By "the particles comprise a matrix material and silicon-based sub-particles embedded in the matrix material", it is meant that the particles comprised in the powder are, in average, larger in size than the silicon-based sub-particles, since they comprise these latter. The particles are typically of micrometric size, while the silicon-based sub-particles are typically of nanometric size.

By "silicon-based sub-particles embedded in the matrix material", it is meant that the silicon-based sub-particles are fixed in the matrix material and surrounded by it. The silicon-based sub-particles are covered in their majority, preferably in their entirety, by the matrix material. Hence, in the powder according to Embodiment 1, the silicon-based sub-particles are preferably in contact only with each other and/or with the matrix material.

The silicon-based sub-particles may have any shape, e.g. substantially spherical but also irregularly shaped, rod-shaped, plate-shaped, etc. In the silicon-based sub-particles, the silicon is present in its majority as silicon metal, to which minor amounts of other elements may have been added to improve properties, or which may contain some impurities, such as oxygen or traces of metals. When considering all elements except oxygen, the average silicon content in such a silicon-based sub-particle is preferably 80 weight % or more, and more preferably 90 weight % or more with respect to the total weight of the silicon-based sub-particle.

Without being bond by theory, the inventors believe that the presence of sulfur in the powder allows the creation of bridges between the small graphitic domains of the carbonaceous material comprised in the matrix material, thereby increasing the elasticity of the carbonaceous material and consequently of the matrix material. Thanks to its properties of elasticity, the matrix material can better accommodate the expansion/contraction of the silicon-based sub-particles during the charge/discharge of the battery, thereby reducing the risks of fractures in the matrix material, of exposures of the silicon-based sub-particles to the electrolyte leading to additional Solid Electrolyte Interface (SEI) formation and consequently to a decrease of the first and average coulombic efficiencies.

The sulfur content by weight in the powder should not be lower than 0.1% of the content of carbonaceous material by weight, since a too low sulfur content would not allow to reach the desired technical effect of increasing the elasticity of the carbonaceous material from the matrix. Similarly, a sulfur content by weight in the powder should not be higher than 1% of the content of carbonaceous material by weight, preferably not higher than 0.8% of the content of carbonaceous material by weight and more preferably not higher than 0.6% of the content of carbonaceous material by weight. A too high sulfur content would lead to a carbonaceous material from the matrix being too elastic and therefore deforming too much, in particular during the charge of the battery (i.e. the lithiation of the silicon-based sub-particles). This could potentially lead to an unacceptable expansion of the negative electrode, which could cause both a reduced cycle life and safety issues if the anode expands more than it is allowed by the battery casing. Furthermore, the sulfur being electrochemically inactive, it is best to limit its content to the level necessary to obtain the technical effect, to keep a specific capacity of the powder as high as possible.

The content of carbonaceous material comprised in the matrix material of a powder can either be measured by conventional techniques, or be calculated based on the specific capacity of the powder. An example of such a calculation is provided in the "Analytical methods" section.

Prererably, the powder also has a silicon content A and a carbon content B, both expressed in weight percentage (wt%), whereby 10 wt% ≤ A ≤ 60 wt% and 30 wt% ≤ B ≤ 89 wt%. A too low silicon content and/or a too high carbon content would lead to a negative electrode material having a too low specific capacity, which is not desired for industrial applications. A too high silicon content would lead to a too high volume expansion during cycling, which is not desired mainly for safety reasons. A too low carbon content would be insufficient to fully cover the silicon-bases sub-particles, which would lead to a reaction between the surface of the silicon-based sub-particles and the electrolyte, leading to the formation of additional SEI layer and a decrease of the performance of the battery.

### Embodiment 2

In a second embodiment according to Embodiment 1, the carbonaceous material comprises graphitic domains, the graphitic domains having a mean size smaller than 10 nm, as determined by the Scherrer equation applied to the powder's X-ray diffraction peak assigned to C(002), having a maximum intensity I_{c} at 2θcᵤ between 26° and 27°.

Preferably, the graphitic domains have a mean size smaller than 5 nm, more preferably smaller than 3 nm and most preferably the graphitic domains have a mean size smaller than 2 nm. Graphitic domains having a mean size smaller than 10 nm, preferably smaller than 5 nm, more preferably smaller than 3 nm and most preferably smaller than 2 nm, lead to a higher electronic conductivity of the powder compared to graphitic domains having a size equal to or large than 10 nm and is therefore preferable. Furthermore, as already mentioned earlier, the presence of sulfur in the powder triggers the creation of bridges between the small graphitic domains of the carbonaceous material comprised in the matrix, thereby increasing the elasticity of the carbonaceous material and consequently of the matrix material. Hence, the smaller the mean size of the graphitic domains of the carbonaceous material comprised in the matrix, the more bridges are created and the more elastic the matrix material, which leads to an increase of the first and average coulombic efficiencies, as already mentioned earlier. In other words, there is a synergetic effect between the sulfur and the graphitic domains having a size smaller than 10 nm, preferably smaller than 5 nm, more preferably smaller than 3 nm and even more preferably smaller than 2 nm.

The Scherrer equation (P.Scherrer, Göttinger Nachrichten 2, 98 (1918)) is a well-known equation for calculating the size of ordered (crystalline) domains from X-Ray diffraction data. In order to avoid machine to machine variations, standardized samples can be used for calibration.

The presence or absence of graphitic domains in the matrix material and the determination of their mean size, can for example be evaluated based on a Transmission Electron Microscopy (TEM) analysis. An example of such an analysis is provided in the "Analytical methods" section.

### Embodiment 3

In a third embodiment according to Embodiment 1 or 2, the powder has a total specific volume of porosity inferior to 0.005 cm³/g, as determined by nitrogen adsorption/desorption measurement. Preferably, the powder has a porosity inferior to 0.003 cm³/g. More preferably, the powder has a porosity inferior to 0.002 cm³/g. Ideally, the powder has no porosity at all / is not porous.

It is advantageous to have a powder with a low porosity or even no porosity, because a high porosity will lower its volumetric capacity (in mAh/cm³ or Ah/l), which is contrary to the objective of achieving a powder with a high specific capacity. Furthermore, the creation of bridges between the small graphitic domains of the carbonaceous material comprised in the matrix is enhanced when the matrix material is dense, i.e. when the matrix material and therefore the powder have a low porosity or are even not porous.

The porosity of the powder can be measured by nitrogen adsorption/desorption measurement. The fact that the powder is not porous can be confirmed by microscopic observation (using SEM or TEM) of one or several cross-section(s) of the particles of the powder. A dense particle, even if it comprises a small amount of irregularly distributed holes (less than 10 per image of a cross-section at a x50000 magnification), is to be considered non-porous, because it is merely an undesired consequence of the thermal decomposition of the carbon precursor, used to form the matrix material.

### Embodiment 4

In a fourth embodiment according to Embodiment 1 or 2, the carbonaceous material is soft carbon. The matrix material may even consist of soft carbon. Soft carbon corresponds to an arrangement of small disordered graphitic domains that can be converted to graphite upon heating at a temperature of 3000°C, in opposition to hard carbon which is not graphitizable.

Soft carbon shows a higher electronic conductivity compared to hard carbon and is therefore preferable. Furthermore, thanks to its disordered collection of small graphitic domains, which leads to the presence of nanovoids in the matrix material, the volumetric expansion of a particle comprising a matrix material mostly comprising soft carbon, during the lithiation of the anode, is reduced compared to a particle comprising a matrix material mostly comprising graphite or graphene.

### Embodiment 5

In a fifth embodiment according to any one of the preceding Embodiments, at least 80% by weight of the sulfur comprised in the powder is present in the matrix material and preferably at least 90% by weight of the sulfur comprised in the powder is present in the matrix material.

In other words, less than 20% by weight and preferably less than 10% by weight of the sulfur comprised in the powder, is present outside the matrix material. It is preferable that all the sulfur comprised in the powder is present in the matrix material, however the migration of part of the sulfur to the silicon particles cannot be excluded.

As already explained earlier, the technical effect resulting from the presence of sulfur is a matrix material having an increased elasticity. Even though the technical effect might still be achieved with a reduced content of sulfur, it is preferable that the large majority of sulfur, at least 80% by weight and preferably at least 90% by weight, is present in the matrix material. Even more specifically, the technical effect is expected to be fully maximized when the sulfur is comprised in the soft carbon comprised in the matrix material.

### Embodiment 6

In a sixth embodiment according to any one of the preceding Embodiments, the silicon-based sub-particles have a number-based size distribution having a d_{NS}50, the d_{NS}50 being larger than or equal to 40 nm and smaller than or equal to 150 nm.

The number-based size distribution is based on a visual analysis, with or without assistance of an image analysis program, of a minimum number of silicon-based sub-particles comprised in the powder. This minimum number of silicon-based sub-particles is at least 1000 particles. An example of a determination of a number-based fraction of particles is provided in the "Analytical methods" section.

For the sake of clarity, a d_{NS}50 of 100 nm for example, would here mean that 50% in number of the at least 1000 silicon-based sub-particles have a size smaller than 100 nm and that 50% in number of the at least 1000 silicon-based sub-particles have a size larger than 100 nm.

Silicon-based sub-particles having a number-based size distribution with a d_{NS}50 lower than 40 nm are very difficult to disperse efficiently in the matrix material, which may decrease the electronic conductivity of the powder.

Silicon-based sub-particles having a number-based size distribution with a d_{NS}50 larger than 150 nm are more subject to fractures during their lithiation, causing a dramatic reduction of the cycle life of a battery containing such a powder.

It is considered that the d_{NS}50 is not affected by the process for making the powder, which means that the d_{NS}50 value of the silicon-based powder used as precursor in the process is the same as the d_{NS}50 value of the silicon-based sub-particles comprised in the powder.

### Embodiment 7

In a seventh embodiment according to any one of the preceding Embodiments, the silicon-based sub-particles have a silicon content by weight being at least 80 wt%. Preferably, the silicon-based sub-particles have a silicon content by weight being at least 90 wt%. Preferably, the silicon-based sub-particles are free of other elements than Si and O, to avoid a too low specific capacity of the silicon-based sub-particles. The silicon-based sub-particles being the main contributor to the specific capacity of the powder, it is preferable that their own capacity is as high as possible and therefore that their content of silicon is as high as possible, in this case at least 80 wt% and preferably at least 90 wt%.

### Embodiment 8

In an eighth embodiment according to any one of the preceding Embodiments, the powder has a silicon content A and an oxygen content C, both expressed in weight percentage (wt%), wherein C ≤ 0.3 x A. Preferably C ≤ 0.2 x A and more preferably C ≤ 0.1 x A.

A powder having a too high oxygen content would suffer from an additional irreversible consumption of lithium by the formation of lithium oxide (Li₂O) during the first lithiation of the powder, thus increasing the initial irreversible capacity loss of a battery containing such a powder.

### Embodiment 9

In a ninth embodiment according to any one of the preceding Embodiments, the powder has a BET surface area which is at most 10 m²/g and preferably at most 5 m²/g.

It is preferable for the powder to have a low BET specific surface area, to decrease the surface of electrochemically active particles in contact with the electrolyte, in order to limit the Solid Electrolyte Interphase (SEI) formation, which consumes lithium, and thus to limit the irreversible loss of capacity of a battery containing such a powder.

### Embodiment 10

In a tenth embodiment according to any one of the preceding Embodiments, the powder further comprises graphite particles.

In particular, the graphite particles are not embedded in the matrix material. This can be visually confirmed based on the analysis of one or several SEM images of cross-sections of powder. The fact that the graphite particles are not embedded in the matrix material is beneficial for at least two reasons: (i) only the silicon-based sub-particles need to be covered by the matrix material, hence less matrix material having a high irreversible capacity and a low specific capacity is needed and (ii) the particles comprising the matrix material with silicon-based sub-particles embedded therein are smaller than if the matrix material would also comprise graphite particles, which leads to less volume expansion upon lithiation of the particles during cycling of the battery.

There may however be some contacts between both types of particles, located at their outer surface. This is even preferable in order to ensure a good electronic conductivity of the powder and thus a high rate capability of a battery comprising the powder.

The graphite particles act as a spacer between the particles comprising the matrix material with silicon-based sub-particles embedded therein, thus preventing an agglomeration of these particles comprising the matrix material into an agglomerated powder. In the absence of such a spacer, the agglomerated powder, in order to be used in the negative electrode of a battery, may require a mechanical treatment, such as a grinding step, which might result in a weakening of the matrix material integrity and eventually in a lower performance of a battery comprising such an agglomerated powder.

The presence of graphite particles in the powder can for example be determined by means of an X-ray diffraction analysis. The method is described in the "Analytical methods" section.

It is preferable that the powder comprises graphite particles and not graphene particles, since graphene particles typically have a much higher specific surface and therefore are expected to significantly increase the formation of the SEI layer during cycling, thereby lowering the performance of a battery comprising such a powder comprising graphene particles, in particular in the initial cycle.

### Embodiment 11

In an eleventh embodiment, the invention also concerns a method for preparing any of the variants of powder as defined above. The method comprises the following steps.

In a Step A, a powder comprising a carbon precursor, a powder comprising silicon-based particles and a powder comprising sulfur are provided.

In a Step B, the powder comprising the carbon precursor and the powder comprising sulfur are blended and the resulting mixture is heated up to a temperature above the softening point of the powder comprising the carbon precursor and maintained at that temperature, while mixing to allow the mixture to flow. This ensures a good dispersion of the powder comprising sulfur within the flow of the carbon precursor.

In a Step C, the powder comprising silicon-based particles is added to the mixture obtained at Step B, still at a temperature above the softening point of the powder comprising the carbon precursor and under constant mixing. This ensures a good dispersion of the powder comprising silicon-based particles within the flow already containing the powder comprising sulfur.

In a Step D, the mixture obtained at Step C is cooled down to room temperature and subsequently milled.

In a Step E, a heat treatment of the powder obtained at step D is performed under oxygen-free atmosphere, at a temperature at least equal to 1000°C. Examples of oxygen-free atmospheres are an argon flow or a nitrogen flow.

Additional steps can involve a final milling and/or sieving of the powder obtained at step E, after it is cooled down to room temperature.

Preferably, the powder comprising the silicon-based particles has a volumetric particle size distribution with a dvs50 value, the dvs50 value being at most 200 nm. This is preferable, for the powder comprising the silicon-based particles to be easily dispersed during Step C and for the powder obtained at the end of Step E, to comprise silicon-based sub-particles which are homogeneously distributed.

### Embodiment 12

In a twelfth embodiment according to Embodiment 11, the mixture obtained at step B has a sulfur content by weight at least equal to 0.06 wt% and at most equal to 0.65 wt%. This is preferable in order to achieve a powder according to Embodiment 1.

### Embodiment 13

In a thirteenth embodiment according to Embodiment 11 or 12, the carbon precursor converts into soft carbon upon the heat treatment of Step E. It is important that the temperature at which the heat treatment is performed is at least equal to 1000°C, to fully convert the carbon precursor into soft carbon. The temperature at which the heat treatment is performed is preferably not higher than 1100°C, to prevent the possible formation of silicon carbide and the formation of graphitic domains of the carbonaceous material comprised in the matrix having a mean size larger than 10 nm.

### Embodiment 14

In a fourteenth embodiment according to any one of the Embodiments 11 to 13, the powder comprising a carbon precursor is petroleum pitch. Petroleum pitch is advantageous in that it has a relatively high carbon yield of about 65 wt% upon firing. Upon firing at a temperature of at least 1000°C, petroleum pitch converts into soft carbon.

### Embodiment 15

In a fifteenth embodiment, the invention finally concerns a battery comprising a powder according to any one of the Embodiments 1 to 10.

### DETAILED DESCRIPTION

In the following detailed description, preferred embodiments are described in detail to enable practice of the invention. Although the invention is described with reference to these specific preferred embodiments, it will be understood that the invention is not limited to these preferred embodiments. To the contrary, the invention includes numerous alternatives, modifications and equivalents as will become apparent from considering the following detailed description.

### Analytical methods used

### Determination of the Si content

The Si content of the powders in the examples and the counterexamples is measured by X-Ray Fluorescence (XRF) using an energy dispersive spectrometer. This method has an experimental random error of +/- 0.3 wt% Si.

In the case where the Si content of specific particles comprising Si-based sub-particles or the Si content of Si-based sub-particles themselves needs to be measured, it might be difficult to measure the silicon content by XRF. In that case, an analysis by Scanning electron microscopy with Energy Dispersive X-Ray Spectrometry (SEM-EDS) might be preferable. This allows to measure the silicon content in a given particle or sub-particle. An analysis of 10 particles or sub-particles is sufficient to obtain an average silicon content value.

### Determination of the oxygen content

The oxygen content of the powders in the examples and the counterexamples is determined by the following method, using an oxygen-nitrogen analyzer (Leco TC600). A sample of the powder to be analyzed is put in a closed tin capsule that is put itself in a nickel basket. The basket is put in a graphite crucible and heated under helium as carrier gas to above 2000°C. The sample thereby melts and oxygen reacts with the graphite from the crucible to CO or CO₂ gas. These gases are guided into an infrared measuring cell. The observed signal is recalculated to an oxygen content.

### Determination of the carbon content

The carbon content of the powders in the examples and the counterexamples is determined by the following method, using a carbon-sulfur analyzer (Leco CS230). The sample is melted in a constant oxygen flow in a ceramic crucible in a high frequency furnace. The carbon in the sample reacts with the oxygen gas and leaves the crucible as CO or CO₂. After conversion of an eventual presence of CO into CO₂, all produced CO₂ is detected by an infrared detector. The obtained signal is finally converted into a carbon content.

### Determination of the sulfur content

The sulfur content of the powders in the examples and the counterexamples is determined by the following method, using a carbon-sulfur analyzer (Leco CS230). The sulfur in the sample reacts with the oxygen gas and leaves the crucible as SO₂. All produced SO₂ is detected by an infrared detector. The obtained signal is finally converted into a sulfur content.

### Determination of the specific surface area (BET)

The specific surface area of the powders is measured with the Brunauer-Emmett-Teller (BET) method using a Micromeritics Tristar 3000. 2g of the powder to be analyzed is first dried in an oven at 120°C for 2 hours, followed by N₂ purging. Then the powder is degassed in vacuum at 120°C for 1 hour prior to the measurement, in order to remove adsorbed species.

### Determination of the total specific volume of porosity

The total specific volume of porosity of the powders in the examples and the counterexamples is determined by the following method, using a nitrogen adsorption/desorption analysis (Micromeritics Tristar 3020). The powder is introduced into a sample tube and undergoes preparation (heating, vacuum or N₂ gas flushing) to remove all foreign molecules from the powder surface and from the sample tube.

It is then cooled to liquid N₂ temperature, where N₂ adsorption occurs on the powder particles. This adsorption is measured at a relative pressure of 0.10 to 0.99 (P/Pₒ). Then the relative pressure drops back so that N₂ desorption occurs on the powder particles. This is measured at a relative pressure of 0.99 to 0.10 (P/Pₒ). This way the BJH pore size distribution curve is obtained. Finally, the total specific volume of porosity is calculated.

### Determination of the electrochemical performance

The electrochemical performance of the powders in the examples and the counterexamples is determined by the following method.

The powders to be evaluated are sieved using a 45 µm sieve and mixed with carbon black, carbon fibers and sodium carboxymethyl cellulose binder in water (2.5 wt%). The ratio used is 89 weight parts powder to be evaluated / 1 weight part carbon black (C65) / 2 weight parts carbon fibers (VGCF) and 8 weight parts carboxymethyl cellulose (CMC). These components are mixed in a Pulverisette 7 planetary ball mill for 30 minutes at 250 rpm.

A copper foil cleaned with ethanol is used as current collector. A 200 µm thick layer of the mixed components is coated on the copper foil. The coated copper foil is then dried for 45 minutes in vacuum at 70°C. A 1.27 cm² circle is punched from the dried coated copper foil and used as an electrode in a coin cell using lithium metal as counter electrode. The electrolyte is 1M LiPF₆ dissolved in EC/DEC 1/1 + 2% VC + 10% FEC solvents.

All coin-cells are cycled using a high precision battery tester (Maccor 4000 series) using the procedure described below, where "CC" stands for "constant current" and "CV" stands for "constant voltage".
- Cycle 1:
   ∘ Rest 6h
   ∘ CC lithiation to 10 mV at C/10, then CV lithiation until C/100
   ∘ Rest 5 min
   ∘ CC delithiation to 1.5 V at C/10
   ∘ Rest 5 min
- From cycle 2 on:
   ∘ CC lithiation to 10 mV at C/2, then CV lithiation until C/50
   ∘ Rest 5 min
   ∘ CC delithiation to 1.2 V at C/2
   ∘ Rest 5 min

The coulombic efficiency (CE) of the coin-cell, being the ratio of the capacity at delithiation to the capacity at lithiation at a given cycle, is calculated for the initial cycle as well as for the subsequent ones. The initial cycle is the most important one in terms of coulombic efficiency, since the reaction of SEI formation has a huge impact on the CE. Typically for a silicon-based powder the coulombic efficiency at the initial cycle can be as low as 80% (or even lower), corresponding to an irreversible capacity loss for the coin-cell of 20%, which is huge. The target is to reach at least 90% CE at the initial cycle.

For the subsequent cycles even though the CE usually increases well over 99%, the skilled person will be aware that even a small difference in coulombic efficiency per cycle, will have, over the hundreds or thousands of charging-discharging cycles a battery is expected to last, a significant cumulative effect. To give an example, a cell with an initial capacity of 1 Ah having an average CE of 99,8% will, after 100 charging-discharging cycles, have a remaining capacity of 0,8 Ah, which is 60% higher than for a cell having an average CE of 99,5% (remaining capacity of 0,5 Ah).

For a cell comprising a negative electrode powder with a specific capacity of 840 ± 20 mAh/g, the target is to reach a coulombic efficiency (CE) of at least 90% in the initial cycle and an average CE of at least 99.7% from cycle 5 to cycle 50.

### Determination of the volumetric particle size distribution of the powders

The volumetric particle size distribution of the powders is determined by Laser Diffraction Sympatec (Sympatec-Helos/BFS-Magic 1812), following the user instructions. The following settings are used for the measurement:
- Dispergen system: Sympatec-Rodos-M
- Disperser: Sympatec-Vibri 1227
- Lens: R2 (0.45 - 87.5 µm range)
- Dispersion: Pressured air at 3 bars
- Optical concentration: 3 -12 %
- Start/stop: 2 %
- Time base: 100 ms
- Feed rate: 80 %
- Aperture: 1.0 mm

It must be noted that feed rate and aperture settings can vary in function of the optical concentration.

The dvs10, dvs50 and dvs90 values of the volumetric particle size distribution of the powder comprising silicon-based particles, determined using the methods described above, are then calculated.

### Determination of the number-based particle size distribution

The number-based particle size distribution of the silicon-based sub-particles is determined via an electron microscopy analysis (SEM or TEM) of a cross-section of the powder, combined with an image analysis.

To do this, a cross-section of the powder, comprising multiple cross-sections of particles of matrix material, each of them comprising multiple cross-sections of silicon-based sub-particles, is prepared following the procedure detailed hereunder. 500 mg of the powder to be analyzed is embedded in 7g of a resin (Buehler EpoxiCure 2) consisting of a mix of 4 parts Epoxy Resin (20-3430-128) and 1 part Epoxy Hardener (20-3432-032). The resulting sample of 1" diameter is dried during at least 8 hours. It is then polished, first mechanically using a Struers Tegramin-30 until a thickness of maximum 5 mm is reached, and then further polished by ion-beam polishing (Cross Section Polisher Jeol SM-09010) for about 6 hours at 6 kV, to obtain a polished surface. A carbon coating is finally applied on this polished surface by carbon sputtering using a Cressington 208 carbon coater for 12 seconds, to obtain the sample, also called "cross-section", that will be analyzed by SEM.

The prepared cross-section is then analyzed using a FEG-SEM JSM-7600F from JEOL equipped with an EDS detector Xflash 5030-127 from Bruker (30mm², 127 eV). The signals from this detector are treated by the Quantax 800 EDS system from Bruker.

The enlargements are generated by applying a voltage of 15kV at a working distance of several millimeters. The images from the backscattered electrons are reported when adding value to the images from the optical microscope.

The size of a silicon-based sub-particle is considered to be equivalent to the maximum straight-line distance between two points on the perimeter of a discrete cross-section of that particle.

For the purpose of illustrating, in a non-limitative way, the determination of the number-based particle size distribution of silicon-based sub-particles, a SEM-based procedure is provided below.
1. Multiple SEM images of the cross-section of the powder comprising the particles of matrix material with silicon-based sub-particles dispersed therein, are acquired.
2. The contrast and brightness settings of the images are adjusted for an easy visualization of the cross-sections of the particles of matrix material and the silicon-based sub-particles. Due to their different chemical composition, the difference in brightness allows for an easy distinction between the particles and the sub-particles.
3. At least 1000 discrete cross-sections of silicon-based sub-particles, not overlapping, with another cross-section of a silicon-based sub-particle, are selected from one or several of the acquired SEM image(s), using a suitable image analysis software. These discrete cross-sections of silicon-based sub-particles can be selected from one or more cross-sections of the powder comprising the particles of matrix material and the silicon-based sub-particles.
4. The size of the discrete cross-sections of the silicon-based sub-particles are measured using a suitable image analysis software for each of the at least 1000 discrete cross-sections of silicon-based sub-particles.

The d_{NS}10, d_{NS}50 and d_{NS}90 values of the number-based particle size distribution of silicon-based sub-particles, determined using the method described above, are then calculated. These number-based particle size distributions can be readily converted to a weight- or a volume-based particle size distribution via well-known mathematical equations.

### Determination of the size of the graphitic domains

The size of the graphitic domains comprised in the carbonaceous material may be determined via a TEM analysis of a cross-section of the powder, obtained as previously described.

However, the preferred method is an X-ray diffraction (XRD) analysis of the powder. The following method is used.

XRD measurements of the powders are performed on a Panalytical 'X Pert Pro system with CuKα1 and CuKα2 radiation, λ = 0.15418 nm, with a step size of 0.017° 2θ, scan rate of 34 minutes (2064 seconds) and measuring from 5° to 90° 2θ on a flattened surface of about 2 cm³ powder material at least, using the ICDD database, PDF-4+, for the identification of present compounds.

The XRD peak having a maximum at 2θcᵤ between 26° and 27° corresponds to the (002) reflection of graphitic carbon, which results from diffraction of X-rays from inter-plane graphene layers. The background is first subtracted from the raw XRD data. The 2θcᵤ values at half maximum intensity on the left side and the right side of the C(002) peak are then determined. The Full Width at Half Maximum (FWHM) value is the difference between these two 2θcᵤ values. The FWHM value is normally determined using the program provided with the X-Ray diffractometer. A manual calculation may be used as well.

The mean size of the graphitic domains is finally calculated by applying the Scherrer equation to the C(002) peak, using the FWHM value just measured, the X-ray wavelength of the equipment and the position of the C(002) peak.

### Determination of the content of carbonaceous material comprised in the matrix material of a powder

In the case where it would be difficult to directly measure the content of carbonaceous material comprised in the matrix material of a powder using known physico-chemical analysis techniques, the following mathematical method might also be used to calculate this content.

Two powders will be used as an illustration for the application of the method. The first powder (Ex1) has the following contents: 20.0 wt% silicon (Si), 1.6 wt% oxygen (O), 0.4 wt% sulfur (S) and 78 wt% carbon I and an average delithiation capacity measured in the first cycle of 3 identical coin-cells, using the method previously described, of 795 mAh/g. Carbonaceous material comprising Si-based particles and graphitic domains having a mean size smaller than 10 nm is observed by TEM and the mean size of the domains is determined applying the Scherrer equation, as described earlier. No graphite particles or other material having graphitic domains larger than 10 nm are observed.

The second powder (Ex2) has the following contents: 20.0 wt% Si, 1.7 wt% O, 0.3 wt% S and 78 wt% C and an average delithiation capacity measured in the first cycle of 3 identical coin-cells, using the method previously described, of 820 mAh/g. Both carbonaceous material comprising Si-based particles and graphitic domains having a mean size smaller than 10 nm, and graphite particles, not being embedded in the matrix material, are observed by combining TEM and XRD analyses.

It is known that carbonaceous material having graphitic domains smaller than 10 nm, and in particular soft carbon, typically have a specific capacity as negative electrode material of about 250 mAh/g. It is also known that graphite particles have a capacity as negative electrode material of about 350 mAh/g. For silicon, a specific capacity of 3000 mAh/g is used, taking in account the irreversible capacity loss occurring during the first cycle.

The specific capacity of a powder is then calculated as follows: Specific capacity powder (mAh/g) = wt% Si × 3000 (mAh/g) + wt% carbonaceous material × 250 (mAh/g) + wt% graphite × 350 (mAh/g) wt% Si + wt% 0 + wt% S + wt% carbonaceous material + wt% graphite = 1 ⇔ wt% graphite = 1 - wt% Si - wt% 0 - wt% S - wt% carbonaceous material

Injecting Equation 2 into Equation 1, the following Formula 1 is obtained: wt% carbonaceous material = (wt% Si × 2650 + (1 - wt% 0 - wt% S) × 350 - specific capacity powder)/100

The content of graphite can then be calculated using Equation 2.

Using Formula 1 and Equation 2, the respective contents are calculated for the powders Ex1 and Ex2 and are reported in Table 1.

**Table 1: Respective chemical contents of illustrative examples Ex1 and Ex2**

| **Table 1** | | |
|---|---|---|
| *Constituents* | *Powder Ex1* | *Powder Ex2* |
| Silicon (Si) (wt%) | 20.0 | 20.0 |
| Oxygen (O) (wt%) | 1.6 | 1.7 |
| Sulfur (S) (wt%) | 0.4 | 0.3 |
| Carbonaceous material in the matrix (wt%) | 78.0 | 53.0 |
| Graphite (not in the matrix) (wt%) | 0.0 | 25.0 |
| Ratio "S/carbonaceous material in the matrix" | 0.51% | 0.57% |

It can be noted that both powders Ex1 and Ex2 would be powders according to the invention.

This mathematical method has been evaluated with 20 samples having known contents of the different constituents and proved to have a precision margin of at least 10%.

### Experimental preparation of counterexamples and examples

### Example 1 (E1), according to the invention

To produce the powder of Example 1, a silicon-based powder is first obtained by applying a 60kW radio frequency (RF) inductively coupled plasma (ICP), using argon as plasma gas, to which a micron-sized silicon powder precursor is injected at a rate of circa 200 g/h, resulting in a prevalent (i.e. in the reaction zone) temperature above 2000K. In this first process step, the precursor becomes totally vaporized. In a second process step, an argon flow of 20 Nm³/h is used as quench gas immediately downstream of the reaction zone in order to lower the temperature of the gas below 1600K, causing a nucleation into metallic submicron silicon powder. Finally, a passivation step is performed at a temperature of 100°C during 5 minutes by adding 100 l/h of a N₂/O₂ mixture containing 1 mole % oxygen.

The specific surface area (BET) of the obtained silicon powder is measured to be 81 m²/g. The oxygen content of the obtained silicon powder is measured to be 7.8 wt%. The number-based particle size distribution of the silicon powder is determined to be: d_{NS}10 = 59 nm, d_{NS}50 = 114 nm and d_{NS}90 = 192 nm.

Then, a dry blend is made of 200g of a petroleum-based pitch powder and 0.25g of a sulfur powder (Sigma-Aldrich, 99.98% purity). It is to be mentioned that the sulfur content of the petroleum-based pitch powder used here has been measured using the method mentioned earlier and was below the detection limit of the equipment. The contribution of the pitch powder to the sulfur content in the final powder is therefore negligible.

The blend is heated to a temperature of 400°C, under a flow of nitrogen and, after a waiting period of 60 minutes, mixed for 30 minutes under high shear by means of a Cowles dissolver-type mixer operating at 1000 rpm.

100g of the silicon powder is then added to the mixture just obtained, still at 400°C. The blend is heated to a temperature of 400°C, under a flow of nitrogen and, after a waiting period of 60 minutes, mixed for 30 minutes under high shear by means of a Cowles dissolver-type mixer operating at 1000 rpm.

The mixture of the silicon-based powder in pitch thus obtained is cooled to room temperature and, once solidified, pulverized and sieved on a 400-mesh sieve, to produce an **intermediate powder.**

A thermal after-treatment is further given to the intermediate powder as follows: the product is put in a quartz crucible in a tube furnace, heated up at a heating rate of 3°C/min to 1020°C, kept at that temperature for two hours and then cooled. All this is performed under argon atmosphere.

The fired product is finally manually crushed in a mortar and sieved over a 325-mesh sieve to form a final powder.

The total Si content in this powder is measured to be 40.1 wt% by XRF. The oxygen, carbon and sulfur content of this powder are measured to be 3.4 wt%, 56.4 wt% and 0.109 wt%, respectively. Since all the carbon is in the matrix material and corresponds to soft carbon having graphitic domains below 10 nm, the ratio "S/carbonaceous material in the matrix" is equal to 0.193%.

The specific surface area (BET) of the obtained powder is measured to be 4.8 m²/g.

The main physico-chemical properties of the powder E1 are reported in Table 2.

### Examples 2 (E2) and 3 (E3), according to the invention

To produce the powders of Examples 2 (E2) and Example 3 (E3), the same method as for the powder of Example 1 is used, except that a quantity of 0.45g and 0.7g, respectively, of sulfur powder is used instead of 0.25g for Example 1. The main physico-chemical properties of the powders E2 and E3 thereby obtained are reported in Table 2.

### Counterexample 1 (CE1), not according to the invention

To produce the powder of Counterexample 1 (CE1), the same method as for the powder of Example 1 is used, except that no sulfur powder is used. The main physico-chemical properties of the powder CE1 thereby obtained are reported in Table 2.

### Counterexample 2 (CE2), not according to the invention

To produce the powder of Counterexample 2 (CE2), the same method as for the powder of Example 1 is used, except that a quantity of 0.1g of sulfur powder is used instead of 0.25g for Example 1. The main physico-chemical properties of the powder CE2 thereby obtained are reported in Table 2.

### Counterexample 3 (CE3), not according to the invention

To produce the powder of Counterexample 3 (CE3), the same method as for the powder of Example 1 is used, except that a quantity of 1.7g of sulfur powder is used instead of 0.25g for Example 1. The main physico-chemical properties of the powder CE3 thereby obtained are reported in Table 2.

### Counterexample 4 (CE4), not according to the invention

To produce the powder of Counterexample 4 (CE4), the same method as for the powder of Example 3 is used, except that the thermal after-treatment further given to the intermediate powder is done at 1200°C for 8 hours instead of 1020°C for 2 hours for the powder of Example 3. The main consequence of this thermal after-treatment done at a higher temperature for a longer time is that the mean size of the graphitic domains of the carbonaceous material comprised in the matrix of the powder CE4 is 14 nm, whereas it is lower than 10 nm for all the other powders produced at a temperature of 1020°C, in particular for the powder E3. The main physico-chemical properties of the powder CE4 thereby obtained are reported in Table 2.

### Counterexample 5 (CE5), not according to the invention

To produce the powder of Counterexample 5 (CE5), a blend is made of 100 g of the silicon-based powder produced in Example 1 and a thermosetting polymer. The weight ratio thermosetting polymer over Si is 0.2. The polymer used is a phenolformaldehyde resin. The blend is further placed in an aerated oven, where the thermosetting polymer is cured at a temperature of 150°C. The obtained cured powder is subsequently bead-milled into sub-micron particles.

Then, a dry blend is made of 180 g of the petroleum-based pitch powder and 0.7 g of the sulfur powder. The blend is heated to a temperature of 400°C, under a flow of nitrogen and, after a waiting period of 60 minutes, mixed for 30 minutes under high shear by means of a Cowles dissolver-type mixer operating at 1000 rpm.

100 g of the milled silicon-polymer particles are then added to the mixture just obtained, still at 400°C. The blend is heated to a temperature of 400°C, under a flow of nitrogen and, after a waiting period of 60 minutes, mixed for 30 minutes under high shear by means of a Cowles dissolver-type mixer operating at 1000 rpm.

The mixture of the silicon-polymer particles in pitch thus obtained is cooled to room temperature and, once solidified, pulverized and sieved on a 400-mesh sieve, to produce an intermediate powder.

A thermal after-treatment is further given to this intermediate powder as follows: the product is put in a quartz crucible in a tube furnace, heated up at a heating rate of 3°C/min to 1020°C, kept at that temperature for two hours and then cooled. All this is performed under argon atmosphere. The thermosetting polymer present in the mixture decomposes without going through a real melting step and, as a consequence, leaves pores inside the carbon matrix created during the heat-treatment. The thermosetting polymer plays the role of a sacrificial material, to create porosity.

The fired product is finally manually crushed in a mortar and sieved over a 325-mesh sieve to form a final powder.

The total Si content in this powder is measured to be 40.1 wt% by XRF. The oxygen, carbon and sulfur content of this powder are measured to be 3.4 wt%, 56.2 wt% and 0.305 wt%, respectively. The total specific volume of porosity, is equal to 0.016 cm³/g, whereas the total specific volume of porosity of all powders E1-E3 and C1-CE4 is comprised between 0.002 cm³/g and 0.004 cm³/g. The matrix material, observed by SEM microscopy of several cross-sections of particles of powder CE5, appears to be porous, whereas the matrix material, observed by SEM microscopy of several cross-sections of particles of powders E1-E3 and C1-CE4 is dense and presents no porosity.

### Example 4 (E4), according to the invention

To produce the powder of Example 4 (E4), 20g of the intermediate powder obtained in Example 2 are mixed with 20g of graphite, for 3 hours on a roller bench, after which the obtained mixture is passed through a mill to de-agglomerate it. At these conditions good mixing is obtained but the graphite particles do not become embedded in the pitch.

A thermal after-treatment is further given to the obtained mixture as follows: the product is put in a quartz crucible in a tube furnace, heated up at a heating rate of 3°C/min to 1000°C, kept at that temperature for two hours and then cooled. All this is performed under argon atmosphere.

The fired product is finally manually crushed in a mortar and sieved over a 325-mesh sieve to form a final composite powder. The main physico-chemical properties of the powder E4 thereby obtained are reported in Table 2.

### Counterexample 6 (CE6), not according to the invention

To produce the powder of Counterexample 6 (CE6), 20g of the intermediate powder obtained in Counterexample 2 are mixed with 20g of graphite, for 3 hours on a roller bench, after which the obtained mixture is passed through a mill to de-agglomerate it. At these conditions good mixing is obtained but the graphite particles do not become embedded in the pitch.

A thermal after-treatment is further given to the obtained mixture as follows: the product is put in a quartz crucible in a tube furnace, heated up at a heating rate of 3°C/min to 1000°C, kept at that temperature for two hours and then cooled. All this is performed under argon atmosphere.

The fired product is finally manually crushed in a mortar and sieved over a 325-mesh sieve to form a final composite powder. The main physico-chemical properties of the powder CE6 thereby obtained are reported in Table 2.

The specific surface areas (BET values) of all powders are comprised between 3.2 and 4.8 m²/g.

**Table 2: Physico-Chemical properties of the powders E1-E4 and CE1-CE6**

| **Table 2** | | | | | | |
|---|---|---|---|---|---|---|
| *Example #* | *Si content (wt%)* | *O content (wt%)* | *S content (wt%)* | *Carbonaceous material in the matrix (wt%)* | *Graphite, not in the matrix (wt%)* | *Ratio "S*/*Carbonac eous material in the matrix"* (%) |
| E1 | 40.1 | 3.4 | 0.109 | 56.4 | 0.0 | 0.193 |
| E2 | 40.0 | 3.4 | 0.195 | 56.4 | 0.0 | 0.346 |
| E3 | 40.1 | 3.4 | 0.303 | 56.3 | 0.0 | 0.538 |
| CE1 | 40.1 | 3.4 | 0.0 | 56.5 | 0.0 | 0.0 |
| CE2 | 40.1 | 3.4 | 0.043 | 56.5 | 0.0 | 0.076 |
| CE3 | 39.8 | 3.4 | 0.734 | 56.1 | 0.0 | 1.308 |
| CE4 | 40.0 | 3.5 | 0.295 | 56.2 | 0.0 | 0.525 |
| CE5 | 40.1 | 3.4 | 0.305 | 56.2 | 0.0 | 0.543 |
| E4 | 20.0 | 1.7 | 0.098 | 28.2 | 50.0 | 0.348 |
| CE6 | 20.1 | 1.7 | 0.022 | 28.2 | 50.0 | 0.078 |

### Electrochemical evaluation of the powders

The powders E1-E3 and CE1-CE5 are tested in coin-cells according to the procedure specified above. The battery is stopped at the end of the first cycle and the 1^{st} lithiation and 1^{st} delithiation capacities are calculated.

The powders E1-E3 and CE1-CE5 are further diluted with graphite, by blending at a 1:1 mass ratio.

The diluted powders from E1-E3 and CE1-CE5 powders thereby obtained and the powders E4 and CE6 are then tested in coin-cells according to the procedure specified above.

The results are reported in Table 3. The values of coulombic efficiency at 1^{st} cycle and average coulombic efficiency reported here are for the diluted powders of E1-E3 and CE1-CE5 powders and for the pure powders of E4 and CE6, to compare cells comprising negative electrode materials having a similar capacity.

**Table 3: Performance of coin-cells containing powders E1-E4 and CE1-CE6**

| **Table 3** | | | | |
|---|---|---|---|---|
| *Example* # | *Capacity 1^{st} delithiation pure powder (mAh*/*g)* | *Capacity 1^{st} delithiation diluted powder* (mAh/g) | *Coulombic efficiency 1^{st} cycle (%)* | *Average Coulombic Efficiency - cycles 5-50 (%)* |
| E1 | 1342 | 846 | 90.30 | 99.75 |
| E2 | 1343 | 847 | 90.73 | 99.79 |
| E3 | 1341 | 845 | 90.81 | 99.80 |
| CE1 | 1342 | 846 | 89.31 | 99.64 |
| CE2 | 1343 | 847 | 89.67 | 99.68 |
| CE3 | 1332 | 839 | 89.98 | 99.72 |
| CE4 | 1336 | 842 | 89.79 | 99.70 |
| CE5 | 1326 | 835 | 88.16 | 99.69 |
| E4 | 845 | / | 90.72 | 99.78 |
| CE6 | 846 | / | 89.65 | 99.67 |

Comparing the results, it is clear that the cells comprising the powders E1-E4 according to the invention, as negative electrode material, have a higher coulombic efficiency at cycle 1 and a higher average coulombic efficiency at cycles 5-50, compared to the cells comprising the powders CE1-CE6 not according to the invention.

## Claims

1. A powder suitable for use in a negative electrode of a battery, wherein the powder comprises particles, wherein the particles comprise a matrix material and silicon-based sub-particles embedded in the matrix material, wherein the matrix material comprises a carbonaceous material, wherein the powder further comprises sulfur, the sulfur content by weight in said powder being at least 0.1% of the content of carbonaceous material by weight and at most 1% of the content of carbonaceous material by weight.

2. A powder according to claim 1, wherein the carbonaceous material comprises graphitic domains, said graphitic domains having a mean size smaller than 10 nm, as determined by the Scherrer equation applied to the powder's X-ray diffraction peak assigned to C(002), having a maximum intensity I_{c} at 2θcᵤ between 26° and 27°.

3. A powder according to claim 1 or 2, having a total specific volume of porosity inferior to 0.005 cm³/g, as determined by nitrogen adsorption/desorption measurement.

4. A powder according to any one of the preceding claims, wherein the carbonaceous material is soft carbon.

5. A powder according to any one of the preceding claims, wherein at least 80% by weight of the sulfur comprised in the powder is present in the matrix material.

6. A powder according to any one of the preceding claims, wherein the silicon-based sub-particles have a number-based size distribution having a d_{NS}50, the d_{NS}50 being larger than or equal to 40 nm and smaller than or equal to 150 nm, when determined following the procedure described in the section "Determination of the number-based particle size distribution" of the description, whereby 50% in number of the silicon-based sub-particles have a size smaller than the d_{NS}50 and 50% in number of the silicon-based sub-particles have a size larger than the d_{NS}50.

7. A powder according to any one of the preceding claims, wherein the silicon-based sub-particles have a silicon content by weight being at least 80 wt%.

8. A powder according to any one of the preceding claims, wherein the powder has a silicon content A and an oxygen content C, both expressed in weight percentage (wt%), wherein C ≤ 0.3 x A.

9. A powder according to any one of the preceding claims, having a BET surface area which is at most 10 m²/g, when determined following the procedure described in the section "Determination of the specific surface area" of the description.

10. A powder according to any one of the preceding claims, further comprising graphite particles.

11. A method for preparing a powder according to any one of the claims 1 to 10, comprising the following steps:
- Step A: providing a powder comprising a carbon precursor, providing a powder comprising silicon-based particles and providing a powder comprising sulfur;
- Step B: mixing the powder comprising the carbon precursor and the powder comprising sulfur and heating up the mixture to a temperature above the softening point of the powder comprising the carbon precursor, while still mixing;
- Step C: adding the powder comprising silicon-based particles to the mixture obtained at Step B and mixing;
- Step D: cooling down to room temperature and subsequently milling the mixture obtained at Step C;
- Step E: performing a heat treatment of the powder obtained at step D under oxygen-free atmosphere, at a temperature at least equal to 1000°C.

12. A method according to claim 11, wherein the sulfur content by weight in the mixture of Step B is at least equal to 0.06 wt% and at most equal to 0.65 wt%.

13. A method according to claim 11 or 12, wherein the carbon precursor converts into soft carbon upon the heat treatment of Step E.

14. A method according to any one of the claims 11 to 13, wherein the carbon precursor is petroleum pitch.

15. A battery comprising a powder according to any one of the claims 1 to 10.

## Patentansprüche

1. Pulver, das zur Verwendung in einer negativen Elektrode einer Batterie geeignet ist, wobei das Pulver Partikel umfasst, wobei die Partikel ein Matrixmaterial und in das Matrixmaterial eingebettete Subpartikel auf Siliziumbasis umfassen, wobei das Matrixmaterial ein kohlenstoffhaltiges Material umfasst, wobei das Pulver ferner Schwefel umfasst, wobei der Schwefelgehalt in dem Pulver mindestens 0,1 Gew.-% des Gehalts an kohlenstoffhaltigem Material und höchstens 1 Gew.-% des Gehalts an kohlenstoffhaltigem Material beträgt.

2. Pulver nach Anspruch 1, wobei das kohlenstoffhaltige Material graphitische Domänen umfasst, wobei die graphitischen Domänen eine mittlere Größe von weniger als 10 nm aufweisen, wie durch die Scherrer-Gleichung bestimmt, die auf den Röntgenbeugungspeak des Pulvers angewendet wird, der C(002) zugeordnet ist, aufweisend eine maximale Intensität I_{C} bei 2θ_{Cu} zwischen 26° und 27°.

3. Pulver nach Anspruch 1 oder 2, aufweisend ein spezifisches Gesamtporositätsvolumen von niedriger als 0,005 cm³/g, wie durch eine Stickstoffadsorptions-/Stickstoffdesorptionsmessung bestimmt.

4. Pulver nach einem der vorstehenden Ansprüche, wobei das kohlenstoffhaltige Material kohlenstoffarmer Stahl ist.

5. Pulver nach einem der vorstehenden Ansprüche, wobei mindestens 80 Gew.-% des in dem Pulver enthaltenen Schwefels in dem Matrixmaterial vorhanden sind.

6. Pulver nach einem der vorstehenden Ansprüche, wobei die Subpartikel auf Siliziumbasis eine zahlenbasierte Größenverteilung aufweisen, aufweisend eine d_{NS}50, wobei die d_{NS}50 größer als oder gleich 40 nm und kleiner als oder gleich 150 nm ist, wenn gemäß dem in dem Abschnitt "Bestimmung der zahlenbasierten Partikelgrößenverteilung" der Beschreibung beschriebenen Vorgang bestimmt, wobei 50 % der Subpartikel auf Siliziumbasis in Zahlen eine Größe kleiner als die d_{NS}50 aufweisen und 50 % der Subpartikel auf Siliziumbasis eine Größe größer als die d_{NS}50 aufweisen.

7. Pulver nach einem der vorstehenden Ansprüche, wobei die Subpartikel auf Siliziumbasis einen Siliziumgehalt von mindestens 80 Gew.-% aufweisen.

8. Pulver nach einem der vorstehenden Ansprüche, wobei das Pulver einen Siliziumgehalt A und einen Sauerstoffgehalt C aufweist, die beide in Gewichtsprozent (Gew.-%) ausgedrückt sind, wobei C ≤ 0,3 x A.

9. Pulver nach einem der vorstehenden Ansprüche, aufweisend einen BET-Oberflächenbereich, der höchstens 10 m²/g beträgt, wenn nach dem in dem Abschnitt "Bestimmung des spezifischen Oberflächenbereichs" der Beschreibung beschriebenen Vorgang bestimmt.

10. Pulver nach einem der vorstehenden Ansprüche, ferner umfassend graphitische Partikel.

11. Verfahren zum Herstellen eines Pulvers nach einem der Ansprüche 1 bis 10, umfassend die folgenden Schritte:
- Schritt A: Bereitstellen eines Pulvers, umfassend einen Kohlenstoffvorläufer, Bereitstellen eines Pulvers, umfassend Partikel auf Siliziumbasis, und Bereitstellen eines Pulvers, umfassend Schwefel;
- Schritt B: Mischen des Pulvers, umfassend den Kohlenstoffvorläufer, und des Pulvers, umfassend Schwefel, und Erhitzen der Mischung auf eine Temperatur oberhalb des Erweichungspunkts des Pulvers, umfassend den Kohlenstoffvorläufer, während weiterhin gemischt wird;
- Schritt C: Hinzufügen des Pulvers, umfassend Partikel auf Siliziumbasis, zu der in Schritt B erhaltenen Mischung und Mischen;
- Schritt D: Abkühlen auf Raumtemperatur und anschließendes Mahlen der in Schritt C erhaltenen Mischung;
- Schritt E: Durchführen einer Wärmebehandlung des in Schritt D erhaltenen Pulvers in sauerstofffreier Atmosphäre bei einer Temperatur von mindestens gleich 1000 °C.

12. Verfahren nach Anspruch 11, wobei der Schwefelgehalt in der Mischung aus Schritt B mindestens gleich 0,06 Gew.-% und höchstens gleich 0,65 Gew.-% beträgt.

13. Verfahren nach Anspruch 11 oder 12, wobei der Kohlenstoffvorläufer sich bei der Wärmebehandlung in Schritt E in kohlenstoffarmen Stahl umwandelt.

14. Verfahren nach einem der Ansprüche 11 bis 13, wobei der Kohlenstoffvorläufer Erdölpech ist.

15. Batterie, umfassend ein Pulver nach einem der Ansprüche 1 bis 10.

## Revendications

1. Poudre appropriée pour être utilisée dans une électrode négative d'une batterie, dans laquelle la poudre comprend des particules, dans laquelle les particules comprennent un matériau de matrice et des sous-particules à base de silicium incorporées dans le matériau de matrice, dans laquelle le matériau de matrice comprend un matériau carboné, dans laquelle la poudre comprend en outre du soufre, la teneur en soufre en poids dans ladite poudre étant d'au moins 0,1 % de la teneur en poids du matériau carboné et d'au plus 1 % de la teneur en poids du matériau carboné.

2. Poudre selon la revendication 1, dans laquelle le matériau carboné comprend des domaines graphitiques, lesdits domaines graphitiques ayant une taille moyenne inférieure à 10 nm, telle que déterminée par l'équation de Scherrer appliquée au pic de diffraction des rayons X de la poudre attribué à C(002), ayant une intensité maximale I_{c} à 2θcᵤ entre 26° et 27°.

3. Poudre selon la revendication 1 ou 2, ayant un volume spécifique total de porosité inférieur à 0,005 cm³/g, tel que déterminé par une mesure d'adsorption/désorption d'azote.

4. Poudre selon l'une quelconque des revendications précédentes, dans laquelle le matériau carboné est du carbone mou.

5. Poudre selon l'une quelconque des revendications précédentes, dans laquelle au moins 80 % en poids du soufre compris dans la poudre est présent dans le matériau de matrice.

6. Poudre selon l'une quelconque des revendications précédentes, dans laquelle les sous-particules à base de silicium ont une distribution de taille basée sur le nombre ayant un d_{NS}50, le d_{NS}50 étant supérieur ou égal à 40 nm et inférieur ou égal à 150 nm, lorsqu'il est déterminé selon la procédure décrite dans la section « Détermination de la distribution de taille des particules basée sur le nombre » de la description, moyennant quoi 50 % en nombre des sous-particules à base de silicium ont une taille inférieure au d_{NS}50 et 50 % en nombre des sous-particules à base de silicium ont une taille supérieure au d_{Ns}50.

7. Poudre selon l'une quelconque des revendications précédentes, dans laquelle les sous-particules à base de silicium ont une teneur en poids de silicium d'au moins 80 %.

8. Poudre selon l'une quelconque des revendications précédentes, dans laquelle la poudre a une teneur en silicium A et une teneur en oxygène C, toutes deux exprimées en pourcentage en poids (% en poids), dans laquelle C ≤ 0,3 x A.

9. Poudre selon l'une quelconque des revendications précédentes, ayant une surface BET qui est d'au plus 10 m²/g, lorsqu'elle est déterminée selon la procédure décrite dans la section « Détermination de la surface spécifique » de la description.

10. Poudre selon l'une quelconque des revendications précédentes, comprenant en outre des particules de graphite.

11. Procédé de préparation d'une poudre selon l'une quelconque des revendications 1 à 10, comprenant les étapes suivantes consistant à :
- Étape A : fournir une poudre comprenant un précurseur de carbone, fournir une poudre comprenant des particules à base de silicium et fournir une poudre comprenant du soufre ;
- Étape B : mélanger la poudre comprenant le précurseur de carbone et la poudre comprenant le soufre et chauffer le mélange à une température supérieure au point de ramollissement de la poudre comprenant le précurseur de carbone, tout en continuant à mélanger ;
- Étape C : ajouter la poudre comprenant des particules à base de silicium au mélange obtenu à l'étape B et mélanger ;
- Étape D : refroidir à température ambiante et puis broyer le mélange obtenu à l'étape C ;
- Étape E : réaliser un traitement thermique de la poudre obtenue à l'étape D sous atmosphère sans oxygène, à une température au moins égale à 1 000 °C.

12. Procédé selon la revendication 11, dans lequel la teneur en soufre en poids dans le mélange de l'étape B est au moins égale à 0,06 % en poids et au plus égale à 0,65 % en poids.

13. Procédé selon la revendication 11 ou 12, dans lequel le précurseur de carbone se transforme en carbone mou lors du traitement thermique de l'étape E.

14. Procédé selon l'une quelconque des revendications 11 à 13, dans lequel le précurseur de carbone est du brai de pétrole.

15. Batterie comprenant une poudre selon l'une quelconque des revendications 1 à 10.
